(19) Europäisches Patentamt
European Patent Office
Office européen des brevets

(11) **EP 1 788 275 B1**

(12) **EUROPÄISCHE PATENTSCHRIFT**

(45) Veröffentlichungstag und Bekanntmachung des Hinweises auf die Patenterteilung:
**28.12.2011 Patentblatt 2011/52**

(51) Int Cl.:
***F16F 9/04*** *(2006.01)*

(21) Anmeldenummer: 06122023.2

(22) Anmeldetag: **10.10.2006**

(54) **Tragkraftbestimmung von Luftfederbälgen**

Bearing force determination for air spring bellows

Détermination d'une force portante pour un soufflet d'un ressort pneumatique

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **16.11.2005 DE 102005054626**

(43) Veröffentlichungstag der Anmeldung:
**23.05.2007 Patentblatt 2007/21**

(73) Patentinhaber: **ContiTech Luftfedersysteme GmbH**
**30165 Hannover (DE)**

(72) Erfinder:
• **Reck, Siegfried**
**31582 Nienburg (DE)**
• **Meiburg, Martin**
**31157 Sarstedt (DE)**
• **Stahmer, Reinhard**
**30823 Garbsen (DE)**

(74) Vertreter: **Finger, Karsten**
**Continental Aktiengesellschaft**
**Patente und Lizenzen**
**Postfach 169**
**30001 Hannover (DE)**

(56) Entgegenhaltungen:
EP-A1- 0 290 328    EP-A1- 1 167 094
EP-A2- 1 541 386    EP-A2- 1 571 014
WO-A1-2004/109150    DE-A1- 4 035 784
DE-A1- 4 413 559    US-A- 4 783 089

**Beschreibung**

Die Erfindung betrifft ein Verfahren zur Bestimmung der Tragkraft einer Luftfeder - gemäß dem Oberbegriff des Anspruchs 1 - und einer Luftfederbalg zur Durchführung des Verfahrens - gemäß dem Oberbegriff des Anspruchs 7. Die genaue Kenntnis der Tragkraft von Luftfedern ist insbesondere bei Nutzfahrzeugen erwünscht.

Zum Zweck der Erfindung und Stand der Technik

Luftfederbälge bestehen aus elastomerem Material, in das zur Aufnahme der Tragkraft ein Festigkeitsträger einvulkanisiert ist. Der Festigkeitsträger besteht in der Regel aus zwei gekreuzten Cord-Gewebelagen, deren Fäden durch den Innendruck des Balges auf Zug belastet werden.

An der Stelle, an der die Tangente an die Balgwand senkrecht zur Federkraftrichtung verläuft, verschwindet die Kraftkomponente im Festigkeitsträger in Federkraftrichtung. An dieser Stelle liegt der äußere Begrenzungskreis der sogenannten wirksamen Fläche.

Die Tragkraft F einer Luftfeder ist das Produkt aus dem relativen Überdruck $p_i$ und dieser wirksamen Fläche $A_w$, aus welcher der wirksame Durchmesser $d_w$ berechnet werden kann. Die Berührungslinie (Umfangslinie Um), wo die an die Balgwand gelegte Tangente parallel zur Federkraftrichtung orientiert ist, ergibt die Querschnitts-Position für den interessierenden Balgdurchmesser $D_m = 2r_m$. Zwischen dem wirksamen Durchmesser $d_W$ und dem vergleichbar größeren Balgdurchmesser (Außendurchmesser) $D_m$ besteht eine mathematisch beschreibbare Beziehung. Damit besteht ein direkter Zusammenhang zwischen dem Balgdurchmesser $D_m$ (bzw. dem Balgumfang $U_m$) einer Luftfeder und deren Tragkraft F.

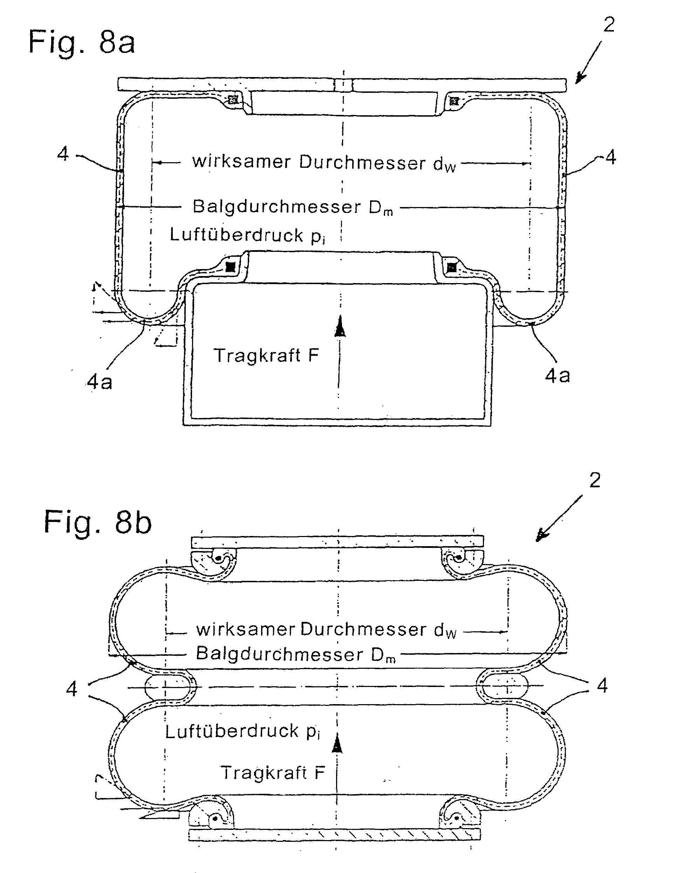

In Fig. 8 werden die für die vorliegende Erfindung relevanten Größen: Tragkraft F, relativer Überdruck (Innendruck) $p_i$, Balgdurchmesser $D_m$ und wirksamer Balgdurchmesser $d_w$ am Beispiel eines Rollbalgs (Fig. 8a) und eines Faltenbalgs (Fig. 8b) dargestellt.

Der Balgdurchmesser und damit das Ergebnis der Tragkraftbestimmung unterliegen verschiedenen Einflüssen. Aufgrund der elastischen Dehnung der Festigkeitsträger verändert sich der Balgdurchmesser infolge des relativen Überdrucks.

Aufgrund von Fertigungstoleranzen (z. B. Gewebewinkel) weicht die Tragkraftkennlinie jeder einzelnen Luftfeder in unterschiedlichem Maße von der nominellen Kennlinie ab.

Weitere wesentliche Einflüsse auf den Balgdurchmesser sind die beanspruchungsbedingte (teilweise auch plastische) Dehnung der Festigkeitsträger im Balg und die Setzung des polymeren Balgwandmaterials.

Die Einflüsse führen zu einer schleichenden Vergrößerung des Balgdurchmessers. Dadurch ergibt sich bei demselben relativen Überdruck eine höhere Tragkraft. D. h.: Für denselben relativen Überdruck können sich unterschiedliche Werte für die Tragkraft ergeben.

In der Praxis wird die Achslast mit Hilfe von hinterlegten Kennlinien bestimmt, die allein von dem gemessenen relativen Überdruck abhängen. Der wirksame Durchmesser der Luftfeder wird dabei als konstant angenommen.

Die konventionelle Methode der Achslastbestimmung berücksichtigt nicht die oben genannten Einflüsse auf den wirksamen Durchmesser der Feder und ist deshalb nicht genau.

Bei einigen handelsüblichen Systemen zur Achslastbestimmung besteht die Möglichkeit der Nachkalibrierung durch die Messung definierter Achslasten bei vorgegebenem relativem Überdruck. Auf diese Weise wird das schleichende Balgwachstum berücksichtigt. Dieses Verfahren verursacht einen erhöhten Aufwand durch die sich wiederholenden Kalibrierungen. Dokument EP 1 167 094 A zeigt die Merkmale vom Oberbegriff von Anspruch 1, Dokument DE 44 13 559 A die Merkmale vom Oberbegriff von Anspruch 6.

Aufgabe der Erfindung

Die vorliegende Erfindung soll ein Verfahren und einen Luftfederbalg beschreiben, bei dem über die individuelle Messung des Balgumfanges (und damit des Balgdurchmessers) die momentane Tragkraft mit großer Genauigkeit bestimmt werden kann.

Lösung und Vorteile

Diese Aufgabe wird mit den Merkmalen der Ansprüche 1 und 7 gelöst. Bevorzugte Ausführungsvarianten ergeben sich aus den Unteransprüchen und der sich anschließenden Beschreibung.

Zeichnungen

Im folgenden wird die erfindungsgemäße Messmethode am Beispiel einer Rollbalg-Luftfeder näher beschrieben. Dabei bezieht der allgemeine Begriff "Rollbalg" auch "Schlauchrollbälge" mit ein, für die das erfindungsgemäße Verfahren auch anwendbar ist.

Es zeigen:

Fig. 1, Fig. 4 und Fig. 6 jeweils einen Luftfederbalg, wobei jeweils oberhalb der Rollfalte entlang des Umfangs jeweils eine erfindungsgemäße leitfähige Struktur zur Sensierung des Balgumfangs angebracht ist.

Fig. 2, Fig. 3, Fig. 5 und Fig. 7 zeigen jeweils elektrische Schaltbilder zur Auswertung der gemäß Fig. 1, 4 und 6 sensierten Signale.

Fig. 8a und 8b zeigen Prinzipdarstellungen einer Rollbalg- und einer Faltenbalg-Luftfeder mit Angabe der für die Erfindung relevanten Größen.

Beschreibung

Die Anordnung zur Bestimmung der Tragkraft F einer Rollbalg-Luftfeder 2 besteht jeweils aus einer umfangsseitig an dem Luftfederbalg 4 angebrachten, dehnbaren, leitfähigen Umfangs-Struktur und einer Auswerteschaltung. Vorzugsweise befindet sich die umfangsseitig an dem Luftfederbalg 4 angebrachte Umfangs-Struktur axial in einem Bereich, wo eine an die Balgwand gelegte Tangente parallel zu der Kraftrichtung verläuft. Bei Rollbalg-Luftfedern befindet sich dieser Bereich zwischen Rollfalte und Luftfederdeckel.

Die entlang des Rollbalg-Umfangs angebrachte Struktur kann dem veränderlichen Umfang folgen. Sie kann z. B. auf die Balgwand (außen oder innen) aufgeklebt oder in die Balgwand einvulkanisiert sein.

Der zu messende Umfang des von dem Rollbalg 4 umschlossenen Luftfeder-Innenraumes 6 verändert eine oder mehrere elektrische Eigenschaften dieser leitfähigen Struktur.

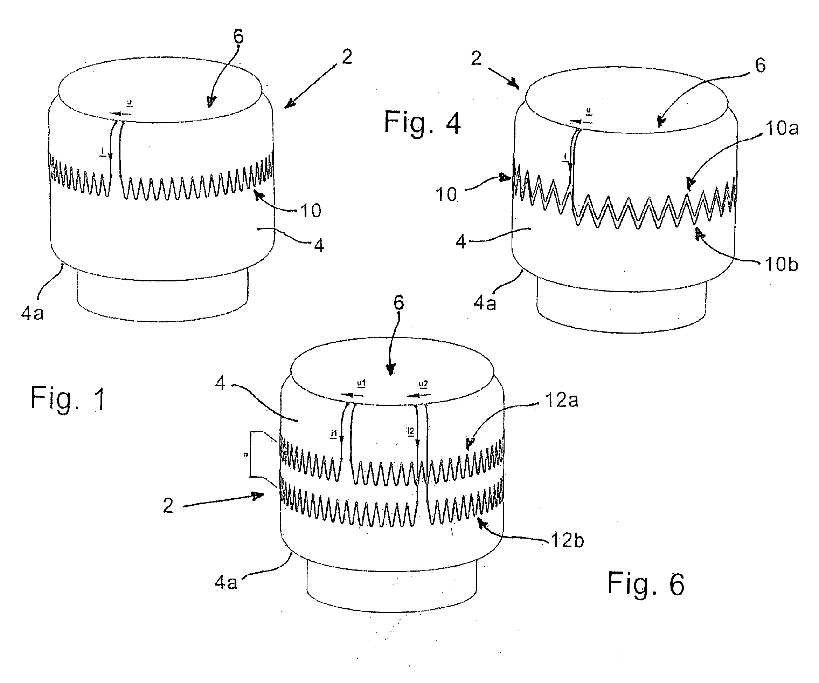

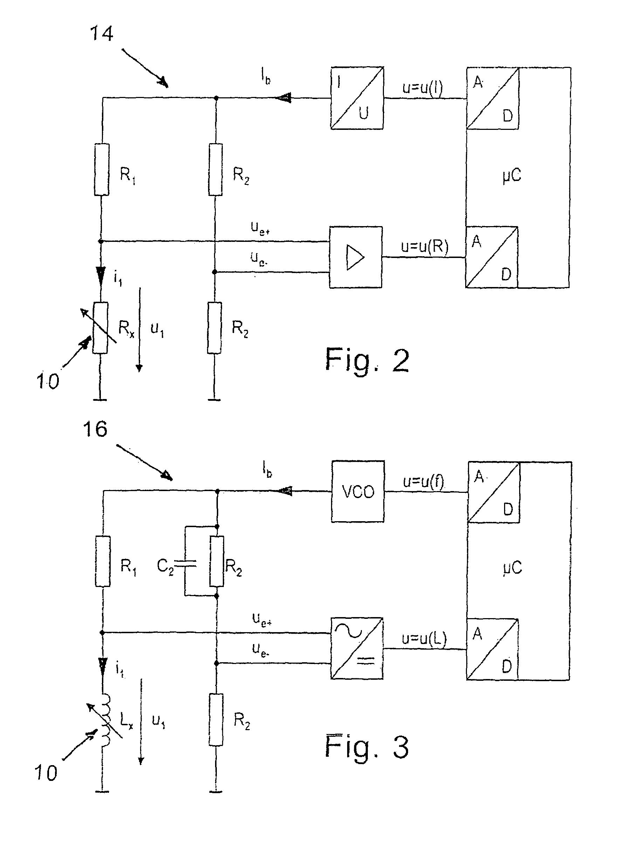

Gemäß Fig. 1 ist diese Umfangsstruktur ein mäanderförmig verlegter Leiter 10, dessen ohmscher Widerstand $R_x$ nach dem Prinzip des Dehnungsmessstreifens proportional zum momentanen Umfang Um zunimmt. Gemäß Fig. 2 erfolgt die Auswertung der Änderung des Widerstandes $R_x$ mit Hilfe einer Wheatstone-Brücke 14.

Legt man an den in Fig. 1 dargestellten Leiter 10 statt eines Gleichstroms einen Wechselstrom an, so lässt sich die Selbstinduktivität des Leiters (der Leiterschleife) 10 auswerten, die von dem zu messenden Umfang Um abhängt. Unter der Voraussetzung, dass der Durchmesser des Leitungsquerschnittes d klein ist gegenüber dem zu messenden Durchmesser (bzw. dem Umfang Um), gilt folgende Näherung für die Induktivität der Leiterschleife 10:

$$L = \mu_0 \cdot U_m/2\pi \cdot \ln(U_m/d \cdot \pi).$$

Die Auswertung erfolgt mit Hilfe einer Maxwell-Wien-Brücke 16 (Fig. 3).

Die Empfindlichkeit der Wechselstromanordnung lässt sich erhöhen, wenn die Leiterstruktur mehr als eine Windung entlang des Umfangs aufweist (Windungen 10a, 10b, ... ; Fig. 4). Für die Induktivität von N Windungen gilt dann:

$$L = \mu_0 \cdot N^2 \cdot U_m/2\pi \cdot \ln(U_m/d \cdot \pi).$$

Für $d/U_m \simeq 0{,}0006$ ergibt sich für die Induktivitätsänderung in erster Näherung:

$$dL/U_m \simeq \mu_0 \cdot N^2.$$

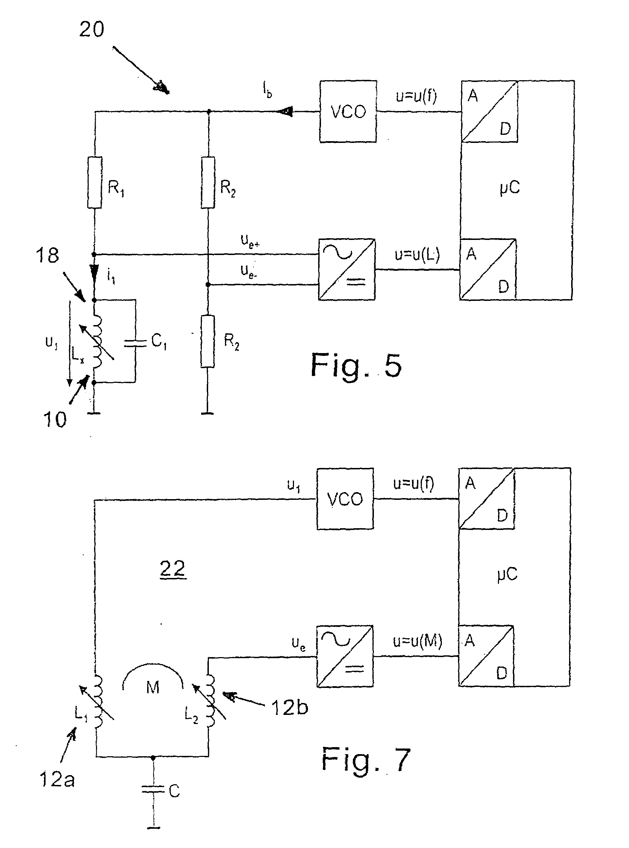

Durch den Aufbau eines aus der Leiterschleife 10, 10a, 10b, ... und einem Kondensator $C_1$ aufgebauten Schwingkreises 18 (Fig. 5) besteht die Möglichkeit, die Änderungen des Durchmessers (bzw. des Umfanges Um) durch deren Verstimmung zu messen (z. B. durch Auswertung der Resonanzfrequenz).

Ein weiterer empfindlicher Aufbau zur Bestimmung des momentanen Balgumfangs Um besteht aus zwei magnetisch gekoppelten Leiterschleifen 12a, 12b (im Abstand a voneinander) mit jeweils N Windungen (Fig. 6), deren Gegeninduktivität bestimmt wird. Der zu messende Umfang Um geht quadratisch in das Messergebnis ein.

$$M = (\mu_0 \cdot N^2 \cdot 4\pi \cdot U_m{}^2) / \{2 \cdot (4 \cdot U_m{}^2 + a^2)^{3/2}\}$$

Bei unmittelbar zueinander benachbarten Leiterschleifen 12a, 12b verschwindet der Abstand a und die Gegeninduktivität ergibt sich zu:

$$M = (\mu_0 \cdot N^2 \pi) / 4U_m.$$

Die Änderung der Gegeninduktivität in Abhängigkeit der Umfangsänderung beträgt bei dieser Anordnung:

$$dM/dU_m = - (\mu_0 \cdot N^2 \cdot \pi) / 4U_m{}^2.$$

Die Auswertung erfolgt ebenfalls mit einer Wechselstromschaltung 22, die nach dem Resonanzverfahren arbeitet (Fig. 7). Die Spannung $U_e$ wird durch Variation der Frequenz $\omega$ der Wechselspannung $U_1$ auf ein Minimum abgeglichen. Wenn die Kapazität C bekannt ist, lässt sich die Gegeninduktivität berechnen:

$$M = 1 / (\omega^2 \cdot C).$$

Aus dem gemessenen Umfang Um lässt sich der tatsächliche wirksame Durchmesser $d_w$ der Luftfeder 2 berechnen, aus dem dann zusammen mit dem relativen Überdruck $p_i$ die Tragkraft F der Feder 2 bestimmt wird. Dieses Verfahren zur Tragkraftbestimmung ist erheblich genauer als bisherige Methoden.

Gegenüber der Traglastmessung, die regelmäßig nachkalibriert wird, ergibt sich ein Vorteil dadurch, dass auf die Kalibriervorgänge verzichtet werden kann, weil immer der momentan tatsächlich wirksame Durchmesser der Luftfeder 2 zur Verfügung steht.

Liste der Bezugszeichen und Formelgrößen

| | |
|---|---|
| 2 | Luftfeder, Feder, Rollbalg-Luftfeder |
| 4 | Balg, Luftfeder-Balg, -Rollbalg, Rollbalg |
| 4a | Rollfalte des Rollbalgs |
| $Am = r_m{}^2 \cdot \pi = U_m{}^2/4\pi$ | momentane Querschnittsfläche des Balgs, - des Rollbalgs oberhalb der Rollfalte |
| $r_m$ | momentaner Radius des Balgs, - des Rollbalgs 4 oberhalb der Rollfalte 4a |
| Um | momentaner Umfang des Balgs, - des Rollbalgs oberhalb der Rollfalte |
| $D_m$ | momentaner Durchmesser des Balgs, Balgdurchmesser |
| 6 | Innenraum des Luftfederbalgs, Luftfeder-Innenraum |
| $p_i$ | momentaner relativer Überdruck innerhalb des Balgs, Luftüberdruck |
| $F = p_i A_W$ | Tragkraft der Luftfeder |
| 10 | dehnbarer, elektrischer Leiter, Leiterschleife; z. B. Dehnmessstreifen |
| $R_x$ | Gleichstromwiderstand des dehnbaren Leiters, ohmscher Widerstand |
| 10a, 10b, ... | Windung(en) der Leiterschleife |
| N | Anzahl der Windungen |
| 12a, 12b | Leiterschleifen |
| d | Durchmesser des Leitungsquerschnittes |
| a | Abstand der Leiterschleifen 12a, 12b voneinander |
| 14 | Wheatstone'sche Brücke |
| 16 | Maxwell-Wien-Brücke |
| 18 | Schwingkreis |

| $C_1$ | Kondensator |
| --- | --- |
| 20 | Brückenschaltung |
| 22 | Wechselstromschaltung |
| C | Kapazität |
| $U_e$ | elektrische Spannung |
| $U_1$ | Wechselspannung |
| $\omega$ | Frequenz der Wechselspannung |
| L | Induktivität der Leiterschleife 10 |

| M | Gegeninduktivität |
| --- | --- |
| $d_w$ | wirksamer Durchmesser der Luftfeder |
| $A_w$ | wirksame Fläche |

**Patentansprüche**

**1.** Verfahren zur Bestimmung der Tragkraft ($F = p_i \cdot d_W^2 \cdot \pi/4$) eines Luftfederbalgs (4),

    - wobei der Balg (4) durch die Formelgrößen:

        - - momentane Querschnittsfläche ($Am = r_m^2 \pi = U_m^2/4\pi$) bei einem momentanen Radius ($r_m$) und einer momentanen Umfangslänge ($U_m$), und
        - - wirksame Fläche ($A_w$) mit einem wirksamen Durchmesser ($d_w$)

    charakterisiert ist, und

    - wobei der Innenraum (6) des Luftfederbalgs (4) einen momentanen relativen Überdruck ($p_i$) aufweist,

    **dadurch gekennzeichnet,**
    **dass** man zunächst den momentanen relativen Überdruck ($p_i$) und die momentane Umfangslänge ($U_m$) bestimmt und daraus dann über den wirksamen Durchmesser ($d_w$) die Tragkraft (F) berechnet.

**2.** Verfahren nach Anspruch 1,
    **dadurch gekennzeichnet,**
    **dass** man die momentane Umfangslänge ($U_m$) nebst zugehöriger Querschnittsfläche ($A_m$), Radius ($r_m$) und Balg-durchmesser ($D_m$) demjenigen axialen Bereich des Balgumfangs zuordnet, wo die an die Balgwand gelegte Tangente parallel zur Richtung der Tragkraft (F) verläuft oder eine Komponente in Richtung der Tragkraft (F) aufweist

**3.** Verfahren nach Anspruch 1 oder 2,
    **dadurch gekennzeichnet,**
    **dass** man die momentane Umfangslänge ($U_m$) mit Hilfe eines dehnungsabhängigen ohmschen Gleichstromwider-stands ($R_x$) einer an dem Umfang des Balgs (4) angebrachten, dehnbaren, leitfähigen Umfangs-Struktur bestimmt, wobei diese Umfangsstruktur als Widerstandsbauelement in einer Wheatstone'schen Brücke (14) dient.

**4.** Verfahren nach Anspruch 1 oder 2,
    **dadurch gekennzeichnet,**
    **dass** man die momentane Umfangslänge ($U_m$) mit Hilfe eines dehnungsabhängigen induktiven Wechselstrom-Widerstandes einer an dem Umfang des Balgs (4) angebrachten, mindestens eine Windung (10a, 10b, ...) aufweisenden, dehnbaren Leiterschleife (10) bestimmt,
    wobei die Leiterschleife (10) ein elektrisches Bauelement einer Maxwell-Wien-Brücke (16) ist.

**5.** Verfahren nach Anspruch 4,
    **dadurch gekennzeichnet,**
    **dass** man die momentane Umfangslänge ($U_m$) durch Messung der Verstimmung eines Schwingkreises (18) bestimmt,
    wobei der Schwingkreis (18) durch die mindestens eine Windung (10a, 10b, ...) aufweisende Leiterschleife (10) in Verbindung mit einem Kondensator ($C_1$) gebildet wird, und wobei der Schwingkreis (18) ein elektrisches Bauteil einer Brückenschaltung (20) ist.

**6.** Verfahren nach Anspruch 1 oder 2,
**dadurch gekennzeichnet,**
**dass** man die momentane Umfangslänge ($U_m$) mit Hilfe der Gegeninduktion zweier, an dem Umfang des Balgs (4) angebrachter, magnetischer, dehnungsabhängig miteinander gekoppelter Leiterschleifen (12a, 12b) bestimmt, wobei eine Auswertung in einer Wechselstromschaltung (22) nach einem Resonanzverfahren erfolgt.

**7.** Luftfederbalg (4) zur Durchführung des Verfahrens nach einem der Ansprüche 1 bis 6, **dadurch gekennzeichnet,** **dass** der Luftfederbalg (4) eine Umfangslängenbestimmungsanordnung mit einer Auswerteschaltung aufweist, die eine an dem Umfang des Balgs (4) angebrachte, dehnbare, leitfähige Umfangs-Struktur als elektrisches Bauteil enthält, wobei mit der Umfangslängenbestimmungsanordnung die Umfangslänge ($U_m$) bestimmt wird und wobei die zu messende Umfangslänge ($U_m$) des von dem Balg (4) umschlossenen Luftfederinnenraums eine oder mehrere elektrische Eigenschaften der leitfähigen Umfangs-Struktur verändert.

**8.** Luftfederbalg (4) nach Anspruch 7,
**dadurch gekennzeichnet,**
**dass** die an dem Umfang des Balgs (4) angebrachte Umfangs-Struktur außen oder innen auf die Balgwand aufgeklebt oder in die Balgwand einvulkanisiert ist.

**9.** Luftfederbalg (4) nach Anspruch 7 oder 8,
**dadurch gekennzeichnet,**
**dass** die Umfangs-Struktur ein Dehnmessstreifen (10), und
**dass** die Auswerteschaltung eine Wheatstone'sche Brücke (14) ist.

**10.** Anordnung nach Anspruch 7 oder 8,
**dadurch gekennzeichnet,**
**dass** die Umfangs-Struktur eine Leiterschleife (10) mit N Windungen (10a, 10b, ...) ist, und
**dass** die Auswerteschaltung eine Maxwell-Wien-Brücke (16) ist.

**11.** Luftfederbalg (4) nach Anspruch 7 oder 8,
**dadurch gekennzeichnet,**
**dass** die Umfangs-Struktur eine Leiterschleife (10) mit N Windungen (10a, 10b, ...) ist und zusammen mit einem Kondensator ($C_1$) einen Schwingkreis (18) bildet, der wiederum elektrisches Bauteil einer Brückenschaltung (20) ist.

**12.** Luftfederbalg (4) nach Anspruch 7 oder 8,
**dadurch gekennzeichnet,**
**dass** die Umfangs-Struktur aus zwei magnetisch miteinander gekoppelten Leiterschleifen (12a, 12b) mit jeweils N Windungen besteht, deren Gegeninduktivität (M) in einer Wechselstromschaltung (22) bestimmbar ist.

**Claims**

**1.** Method for determining the bearing force ($F = p_i \cdot d_w^2 \cdot \pi/4$) of an air spring bellows (4),

- the bellows (4) being **characterized by** the formula variables:

- - instantaneous cross-sectional area ($A_m = r_m^2\pi = U_m^2/4\pi$) for an instantaneous radius ($r_m$) and an instantaneous circumferential length ($U_m$), and
- - effective area ($A_w$) with an effective diameter ($d_w$)

and
- the interior (6) of the air spring bellows (4) having an instantaneous relative overpressure ($p_i$),

**characterized in that** firstly the instantaneous relative overpressure ($p_i$) and the instantaneous circumferential length ($U_m$) are determined, and the bearing force (F) is calculated therefrom via the effective diameter ($d_w$).

**2.** Method according to Claim 1, **characterized in that** the instantaneous circumferential length ($U_m$) together with the associated cross-sectional area ($A_m$), radius ($r_m$) and bellows diameter ($D_m$) are assigned to that axial region of the bellows circumference where the tangent applied to the bellows wall runs parallel to the direction of the bearing force (F), or has a component in the direction of the bearing force (F).

3. Method according to Claim 1 or 2, **characterized in that** the instantaneous circumferential length ($U_m$) is determined with the aid of a strain-dependent ohmic DC resistor ($R_x$) of an extensible, conductive circumferential structure fitted on the circumference of the bellows (4), this circumferential structure serving as resistance component in a Wheatstone bridge (14).

4. Method according to Claim 1 or 2, **characterized in that** the instantaneous circumferential length ($U_m$) is determined with the aid of a strain-dependent inductive AC resistor of an extensible conductor loop (10) which is fitted on the circumference of the bellows (4) and has at least one turn (10a, 10b, ...), the conductor loop (10) being an electrical component of a Maxwell-Wien bridge (16).

5. Method according to Claim 4, **characterized in that** the instantaneous circumferential length ($U_m$) is determined by measuring the tuning of a resonant circuit (18), the resonant circuit (18) being formed by the conductor loop (10) having at least one turn (10a, 10b, ...) in conjunction with a capacitor ($C_1$), and the resonant circuit (18) being an electrical component of a bridge circuit (20).

6. Method according to Claim 1 or 2, **characterized in that** the instantaneous circumferential length ($U_m$) is determined with the aid of the back-induction of two magnetic conductor loops (12a, 12b) which are fitted on the circumference of the bellows (4) and coupled to one another in a fashion dependent on strain, an evaluation being performed in an AC circuit (22) by using a resonance method.

7. Air spring bellows (4) for carrying out the method according to one of Claims 1 to 6, **characterized in that** the air spring bellows (4) has an arrangement for determining circumferential length with an evaluation circuit which includes as electrical component an extensible, conductive circumferential structure fitted on the circumference of the bellows (4), the circumferential length ($U_m$) being determined with the aid of the arrangement for determining circumferential length, and one or more electrical properties of the conductive circumferential structure being varied by the circumferential length ($U_m$), which is to be measured, of the air spring interior surrounded by the bellows (4).

8. Air spring bellows (4) according to Claim 7, **characterized in that** the circumferential structure fitted on the circumference of the bellows (4) is glued to the outside or inside of the bellows wall, or is vulcanized into the bellows wall.

9. Air spring bellows (4) according to Claim 7 or 8, **characterized in that** the circumferential structure is a strain gauge (10), and **in that** the evaluation circuit is a Wheatstone bridge (14).

10. Air spring bellows (4) according to Claim 7 or 8, **characterized in that** the circumferential structure is a conductor loop (10) with N turns (10a, 10b, ...) and **in that** the evaluation circuit is a Maxwell-Wien bridge (16).

11. Air spring bellows (4) according to Claim 7 or 8, **characterized in that** the circumferential structure is a conductor loop (10) with N turns (10a, 10b, ...) and forms together with a capacitor ($C_1$) a resonant circuit (18) which is, in turn, an electrical component of a bridge circuit (20).

12. Air spring bellows (4) according to Claim 7 or 8, **characterized in that** the circumferential structure consists of two conductor loops (12a, 12b) which are magnetically coupled to one another and respectively have N turns whose back-inductance (M) can be determined in an AC circuit (22).

**Revendications**

1. Procédé de détermination de la force portante ($F = p_i.d_w^2.\pi/4$) d'un soufflet (4) d'amortisseur pneumatique, le soufflet (4) étant **caractérisé par** les grandeurs de formule suivantes :

   - une superficie momentanée de la surface transversale ($A_m = r_m^2\pi = U_m^2/4\pi$) pour un rayon instantané ($r_m$) et une longueur périphérique instantanée ($U_m$) et
   - une surface efficace ($A_w$) d'un diamètre efficace ($d_w$),

   l'espace intérieur (6) du soufflet (4) d'amortisseur pneumatique présentant une surpression relative instantanée ($p_i$), **caractérisé en ce que**

la surpression relative instantanée ($p_i$) et la longueur périphérique instantanée ($U_m$) sont d'abord déterminées, la force portante (F) étant ensuite déterminée à partir de ces valeurs par l'intermédiaire du diamètre efficace ($d_w$).

2. Procédé selon la revendication 1, **caractérisé en ce que** la longueur périphérique instantanée ($U_m$), la superficie ($A_m$) de la section transversale, le rayon ($r_m$) et le diamètre ($D_m$) du soufflet sont associés à la partie axiale de la périphérie du soufflet dans laquelle la tangente à la paroi du soufflet s'étend parallèlement à la direction de la force portante (F) ou présente une composante dans la direction de la force portante (F).

3. Procédé selon la revendication 1 ou 2, **caractérisé en ce que** la longueur périphérique instantanée ($U_m$) est déterminée à l'aide d'une résistance ohmique ($R_x$) en courant continu, fonction de l'allongement, d'une structure périphérique conductrice extensible appliquée sur la périphérie du soufflet (4), cette structure périphérique servant de composant résistif d'un pont de Wheatstone (14).

4. Procédé selon la revendication 1 ou 2, **caractérisé en ce que** la longueur périphérique instantanée ($U_m$) est déterminée à l'aide d'une résistance inductive en courant alternatif, fonction de l'allongement, d'une boucle conductrice extensible (10) appliquée sur la périphérie du soufflet (4) et présentant au moins une spire (10a, 10b, ...), la boucle conductrice (10) étant un composant électrique d'un pont de Maxwell-Wien (16).

5. Procédé selon la revendication 4, **caractérisé en ce que** la longueur périphérique instantanée ($U_m$) est déterminée par mesure de l'accord d'un circuit oscillant (18), le circuit oscillant (18) étant formé par la boucle conductrice (10) présentant au moins une spire (10a, 10b, ...) en association avec un condensateur ($C_1$), le circuit oscillant (18) étant un composant électrique d'un circuit de pont (20).

6. Procédé selon la revendication 1 ou 2, **caractérisé en ce que** la longueur périphérique instantanée ($U_m$) est déterminée à l'aide de la contre-induction de deux boucles conductrices magnétiques (12a, 12b) placées sur la périphérie du soufflet (4) et couplées l'une à l'autre en fonction de l'allongement, l'évaluation s'effectuant dans un circuit (22) à courant alternatif par un procédé de résonance.

7. Soufflet (4) d'amortisseur pneumatique destiné à mettre en oeuvre le procédé selon l'une des revendications 1 à 6, **caractérisé en ce que** le soufflet (4) d'amortisseur pneumatique présente un ensemble de détermination de la longueur périphérique doté d'un circuit d'évaluation qui contient comme composant électrique une structure périphérique conductrice, extensible et appliquée sur la périphérie du soufflet (4), la longueur périphérique ($U_m$) étant déterminée à l'aide de l'ensemble de détermination de longueur périphérique et la longueur périphérique ($U_m$) de l'espace intérieur de l'amortisseur pneumatique entouré par le soufflet (4), qui doit être déterminée, modifiant une ou plusieurs propriétés électriques de la structure périphérique conductrice.

8. Soufflet (4) d'amortisseur pneumatique selon la revendication 7, **caractérisé en ce que** la structure périphérique appliquée sur la périphérie du soufflet (4) est collée à l'extérieur ou à l'intérieur de la paroi du soufflet ou est incorporée dans la paroi du soufflet par vulcanisation.

9. Soufflet (4) d'amortisseur pneumatique selon la revendication 7 ou 8, **caractérisé en ce que** la structure périphérique est un ruban (10) de mesure d'allongement et **en ce que** le circuit d'évaluation est un pont de Wheatstone (14).

10. Soufflet (4) d'amortisseur pneumatique selon la revendication 7 ou 8, **caractérisé en ce que** la structure périphérique est une boucle conductrice (10) comptant N spires (10a, 10b, ...) et **en ce que** le circuit d'évaluation est un pont de Maxwell-Wien (16).

11. Soufflet (4) d'amortisseur pneumatique selon la revendication 7 ou 8, **caractérisé en ce que** la structure périphérique est une boucle conductrice (10) comptant N spires (10a, 10b, ...) et forme avec un condensateur ($C_1$) un circuit oscillant (18) qui lui-même est un composant électrique d'un circuit de pont (20).

12. Soufflet (4) d'amortisseur pneumatique selon la revendication 7 ou 8, **caractérisé en ce que** la structure périphérique est une boucle conductrice (10) comptant N spires (10a, 10b, ...) est constituée de deux boucles conductrices (12a, 12b) couplées magnétiquement l'une à l'autre et présentant chacune N spires, et dont la contre-inductance (M) peut être déterminée dans un circuit (22) à courant alternatif.

Fig. 4

Fig. 1

Fig. 6

EP 1 788 275 B1

Fig. 2

Fig. 3

Fig. 5

Fig. 7

## Fig. 8a

wirksamer Durchmesser $d_W$

Balgdurchmesser $D_m$

Luftüberdruck $p_i$

Tragkraft F

4

4

4a

4a

2

## Fig. 8b

wirksamer Durchmesser $d_W$

Balgdurchmesser $D_m$

Luftüberdruck $p_i$

Tragkraft F

4

4

2

**EP 1 788 275 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1167094 A

- DE 4413559 A